# EUROPÄISCHE PATENTSCHRIFT

(11) **EP 2 379 652 B1**
(45) Veröffentlichungstag und Bekanntmachung des Hinweises auf die Patenterteilung: **30.03.2016**
(21) Anmeldenummer: 10701485.4
(22) Anmeldetag: 06.01.2010
(51) Int. Cl.: C09D 5/03

(54) **VERFAHREN ZUR HERSTELLUNG EINES PULVERLACKS**
METHOD FOR PRODUCING A POWDER COATING
PROCÉDÉ DE PRODUCTION D'UNE PEINTURE EN POUDRE

(30) Priorität: 06.01.2009 DE 102009004141
(43) Veröffentlichungstag der Anmeldung: 26.10.2011
(73) Patentinhaber: EWALD DÖRKEN AG, 58313 Herdecke (DE)
(72) Erfinder: REUSMANN, Gerhard, 45259 Essen (DE); KLEINKORRES, Angela, 58300 Wetter (DE)
(74) Vertreter: Von Rohr Patentanwälte Partnerschaft mbB
(86) Internationale Anmeldenummer: PCT/EP2010/050077
(87) Internationale Veröffentlichungsnummer: WO 2010/079181

(56) Entgegenhaltungen:
- EP-A1- 0 667 889
- EP-A1- 1 095 110
- EP-A1- 1 661 954
- EP-A1- 1 881 041

## Beschreibung

Die Erfindung betrifft ein Verfahren zur Herstellung eines Pulverlacks sowie einen Pulverlack.

Aus dem Stand der Technik sind zur Beschichtung von Werkstücken neben Lacken, die Wasser oder organische Lösemittel enthalten und die in flüssiger Form aufgetragen werden, Pulverlacke von Bedeutung. Diese letzteren werden als Feststoff in Pulverform auf das Werkstück aufgebracht. Bei gängigen Pulverlackbeschichtungsverfahren wird das zu beschichtende Werkstück geerdet. Das Pulver wird (beispielsweise durch eine Hochspannungselektrode im Corona-Verfahren) elektrisch aufgeladen und haftet, nachdem es durch einen Luftstrom in Richtung des Werkstücks befördert wurde, auf dessen Oberfläche an, wobei es elektrostatisch angezogen wird. Anschließend erfolgt auf dem Werkstück eine Filmbildung. Dies geschieht typischerweise durch wenigstens oberflächliches Erhitzen des Werkstücks. Hierbei schmilzt entweder ein im Pulverlack enthaltenes, thermoplastisches Bindemittel auf und bildet beim Abkühlen einen Beschichtungsfilm, oder aber ein oder mehrere Bindemittel härten unter Temperatureinfluss aus. Es existieren daneben auch z.B. UV-aushärtende Pulverlack-Systeme.

Ein Pulverlack besteht in seiner einfachsten Form aus einem Bindemittel. In der Regel enthalten Pulverlacke allerdings Zusatzstoffe wie Pigmente, Additive und Füllstoffe, die wie das Bindemittel in fester Form vorliegen. Hiermit lassen sich bestimmte Oberflächeneigenschaften wie Farbe, Glanz, Härte, Reibungszahl etc. einstellen, die das Bindemittel nicht bietet. Füllstoffe dienen u. A. dazu, die Bindemittelkomponente zu "strecken" und so Kosten einzusparen. Verschiedene Zusatzstoffe werden weiter unten noch erläutert.

Nach dem Stand der Technik werden zunächst Bindemittel und Zusatzstoffe abgewogen, gemischt und anschließend extrudiert. Durch die Extrusion erfolgt eine intensive Homogenisierung der Rohstoffe. Erreicht wird dies durch ein Aufschmelzen des Bindemittels, verbunden mit intensiv einwirkenden Scherkräften, wodurch die Zusatzstoffe im im Lack optimal verteilt werden. Bei einem Extruder sind in einem beheizbaren Gehäuse eine oder mehrere Schnecken angeordnet, die während des Extrudierens die Rohstoffe durchmischen und dispergieren, während sie sie weitertransportieren. Das Resultat ist eine weitgehend homogene Masse, die nach Abkühlung und Verfestigung granuliert und anschließend vermahlen wird. In dem fertigen Pulverlack sind nun die Partikel der Zusatzstoffe wenigstens teilweise mit Bindemittel überzogen. Oft werden in einem letzten Verfahrensschritt, dem Sichten, (z.B. in einem Zyklonabscheider) zu kleine Pulverteilchen abgetrennt (DE 196 44 728 A1, DE 196 07 914 A1).

Das Verfahren nach dem Stand der Technik bringt allerdings Probleme mit sich. Da die Zusatzstoffe mit dem Bindemittel co-extrudiert werden, können diese das Innere des Extruders beschädigen. Werden z.B. besonders harte Partikel zugefügt, um harte, abriebfeste Beschichtungen zu gewährleisten, so führen diese, insbesondere aufgrund der hohen einwirkenden Kräfte, zu Abrieb am Extrudergehäuse und an den Schnecken. Bei längerem Betrieb führt dies schließlich dazu, dass die Teile ausgetauscht werden müssen. Bestimmte feste Schmierstoffe, die zur Einstellung von tribologischen Eigenschaften der Pulverlackbeschichtung dienen, neigen dazu, sich auf Oberflächen im Inneren des Extruders abzusetzen und lassen sich nur schwer wieder entfernen. Ohne intensive, aufwändige Reinigung lässt sich der Extruder nicht mehr verwenden.

Die EP 0 667 889 offenbart das Zusetzen von Hartstoffen zu Pulverlacken. Die EP 1 095 110 offenbart das Zusetzen von schmelzfähigen Schmiermitteln zum Mattieren der Lackoberfläche.

Aufgabe der vorliegenden Erfindung ist es daher, Maßnahmen vorzuschlagen, um unter Verwendung von Pulverlack eine optimale Einstellung der Oberflächeneigenschaften zu ermöglichten.

Die Aufgabe wird gelöst durch ein Verfahren nach Anspruch 1.

Bei dem erfindungsgemäßen Verfahren zur Herstellung eines Pulverlacks wird in einem ersten Schritt eine pulverförmige Basiszusammensetzung, die Bindemittel umfasst, einen funktionsfähigen Pulverlack dar. Als Bindemittel wird hier, entsprechend dem Stand der Technik, jede Substanz aufgefasst, die in der Lage ist, allein oder in Kombination mit anderen Substanzen (z.B. Härtern oder Katalysatoren) einen Beschichtungsfilm auf einer Oberfläche eines Werkstücks auszubilden. In der Regel wird die Basiszusammensetzung in diesem Sinne filmbildend sein, es ist allerdings auch denkbar, dass noch eine zusätzliche Komponente notwendig ist. So kann z.B. die Basiszusammensetzung ein Bindemittel enthalten, das nur in Kombination mit einem Härter aushärtet, wobei der Härter nicht in der Basiszusammensetzung enthalten ist, sondern nachträglich hinzugegeben wird.

Der Begriff pulverförmig bedeutet, dass die Basiszusammensetzung als sehr feinkörniges Gemenge vorliegt. Die Korngröße liegt in der Regel in dem für Pulverlacke entsprechend dem Stand der Technik typischen Bereich, so dass der überwiegende Teil der Körner eine Größe zwischen 10 µm und 100 µm aufweist. Zwar sind grundsätzlich auch grob- oder feinkörnigere Pulver denkbar, jedoch sind diese, wie dem Fachmann bekannt ist, im Beschichtungsprozess schlecht handhabbar. Die Körner können in sich heterogen oder homogen sein, ebenso können verschiedene Körner unterschiedlicher Zusammensetzung vertreten sein.

Erfindungsgemäß wird in einem zweiten Schritt wenigstens ein pulverförmiger Zuschlagstoffs mit der pulverförmigen Basiszusammensetzung zu einem fertigen Pulverlack vermischt. Hierbei ist es sowohl möglich, dass vor bzw. während des Vermischens der Zuschlagsstoff zur Basiszusammensetzung zugegeben wird, als auch dass die Basiszusammensetzung zum Zuschlagsstoff zugegeben wird oder dass beide Komponenten parallel in eine Vorrichtung bzw. einen Behälter zum Vermischen gegeben werden. Bestimmte Zuschlagstoffe, die im Zusammenhang mit der vorliegenden Erfindung von besonderer Bedeutung sind, werden im Folgenden noch genannt.

Als pulverförmig werden hier, entsprechend der gängigen Auffassung, Feststoffe mit kleiner Korngröße bezeichnet. Es ist allerdings nicht ausgeschlossen, dass ein Zuschlagsstoff geringe Mengen an Flüssigkeit umfasst.

Erfindungsgemäß bleibt beim Vermischen ein pulverförmiger Zustand von Zuschlagstoff und Basiszusammensetzug erhalten. D.h. es findet kein völliges Verschmelzen wie beim Extrusionsprozess statt, welches ein anschließendes Vermahlen erfordern würde. Diese Verfahrensschritte sind auch im weiteren Verlauf nicht notwendig. Der Pulverlack ist nach dem Vermischen in dem Sinne "fertig", als er unmittelbar mit aus dem Stand der Technik bekannten Verfahren aufgebracht und zu Beschichtung verarbeitet werden kann. Es kann zwar ggf. zu einem gewissen Vermahlen der pulverförmigen Komponenten kommen. Ebenso kann, wie unten noch erläutert wird, ein teilweises Anschmelzen herbeigeführt werden; dennoch bleiben die Komponenten während des gesamten Mischvorgangs pulverförmig. Sie bleiben insbesondere in ihrer Zusammensetzung im Wesentlichen erhalten.

In vielen Fällen kann das erfindungsgemäße Verfahren ohne Temperatureinwirkung durchgeführt werden. Hierbei bleibt die Zusammensetzung von Körnern der Basiszusammensetzung und des Zuschlagstoffs gleich. Dies steht im Gegensatz zum Extrusionsprozess, bei dem ein Verschmelzen von Komponenten erfolgt, so dass nach dem Vermahlen des Extrudats praktisch jedes einzelne Korn für sich aus einer Mischung der einzelnen Komponenten besteht. Eine mechanische Trennung der einzelnen Komponenten ist kaum mehr möglich.

Wird das vorliegende Verfahren ohne ein Erwärmen der Komponenten durchgeführt, liegen die Körner des Zuschlagstoffs nach dem Vermischen nach wie vor separat oder allenfalls in losen Agglomeraten mit Körnern der Basiszusammensetzung vor. Der Begriff "separat" ist in diesem Zusammenhang so zu verstehen, dass einzelne Körner nicht miteinander verbunden sind. Durch den Mischprozess ist die Verteilung der Körner innerhalb des Pulverlacks selbstverständlich zufällig und ein makroskopisches Separieren von Zuschlagstoff und Basiszusammensetzung ist nicht durchführbar.

Bei Agglomeraten haften einzelne Körner lose aneinander, z.B. aufgrund von elektrostatischer Wechselwirkung. In diesem Fall zeigt allerdings eine mikroskopische Untersuchung, dass hier mehrere kleine Körner vorliegen, die eher punktweise als flächig aneinander haften. Dies ist abzugrenzen von Aggregaten, die sich beim Extrudieren bilden. Bei diesen liegen die einzelnen Bestandteile eines Korns (z.B. Bindemittel, Füllstoff, Farbpigment etc.) zwar chemisch separat vor, sind aber durch Einwirkung von Kräften und Temperatur flächig miteinander verbunden.
Unterbleibt ein Erwärmen, so bleiben typischerweise im Rahmen des erfindungsgemäßen Verfahrens beim Vermischen die Korngrößen der Basiszusammensetzung und des Zuschlagstoff gleich. Auch dies steht im Gegensatz z.B. zum Extrusionsverfahren, wo ein Aufbrechen von Agglomeraten der Zusatzstoffe erfolgt und sich folglich die Korngröße derselben ändert. Auch ein sonstiges Vermahlen oder dergleichen, verbunden mit den hierfür notwendigen Drücken und Scherkräften, kommt beim erfindungsgemäßen Vermischen in der Regel nicht vor.

Die Aussage bezüglich der Korngrößen ist in diesem Zusammenhang statistisch aufzufassen. Zum Einen ist sind die Korngrößen sowohl von Basiszusammensetzung als auch Zuschlagstoff in der Regel nicht einheitlich, sondern statistisch verteilt. Somit bedeutet ein Gleichbleiben der Korngröße ein gleichbleiben der genannten statistischen Verteilung. Des Weiteren versteht sich, dass bei jedem Mischprozess ein geringer Anteil (z.B. 5% oder weniger) der Körner, aus denen die Pulver bestehen, zerteilt werden kann. Die geringfügige Veränderung der Korngrößenverteilung, die hierdurch hervorgerufen wird, wird in diesem Zusammenhang vernachlässigt, wenn von einem Gleichbleiben der Korngrößen die Rede ist. Ein solches Zerteilen geschieht aber beim erfindungsgemäßen Verfahren allenfalls unbeabsichtigt und ist von Verfahren nach dem Stand der Technik abzugrenzen, bei denen ein erheblicher Anteil der Körner (z.B. 50-95%) zerteilt wird.

Daneben kann es - auch innerhalb der Körner der Basiszusammensetzung bzw. der des Zuschlagstoffs - zu losen Agglomerationen kommen, d.h. einem Aneinanderhaften von kleineren Körnern, die gewissermaßen ein großes Korn bilden. Eine solche Agglomeration, zu der es auch beim Fehlen von Temperatureinwirkung kommen kann, kann die Korngrößenverteilung geringfügig verändern.

Da beim erfindungsgemäßen Verfahren hohe Temperaturen, Drücke und Scherkräfte weitgehend vermieden werden, wird eine Abnutzung einer Vorrichtung, mittels der die Komponenten vermischt werden (im Folgenden als "Mischer" bezeichnet), ebenso minimiert wie eine Verschmutzung der Vorrichtung. Dies wird in Bezug auf Zuschlagsstoffe, die beim vorliegenden Verfahren bevorzugt eingesetzt werden, im Weiteren noch erläutert.

Es hat sich auch gezeigt, dass für bestimmte Zuschlagstoffe, die zur Einstellung von Oberflächeneigenschaften eingesetzt werden, ein Extrusionsprozess in soweit nachteilig sein kann, als hierbei die Oberfläche der einzelnen Körner des Zuschlagstoffs völlig oder weitgehend mit Bindemittel verschmolzen und überzogen wird. Dies kann sich in der fertigen Beschichtung nachteilig auswirken, da die entsprechenden Körner, auch wenn sie sich an der ausgehärteten Oberfläche des Beschichtungsfilms befinden, stets mit Bindemittel überzogen sind, wodurch ihr Einfluss auf die Einstellung von Oberflächeneigenschaften wie z.B. der Reibungszahl gemindert wird.

Bei Pulverlacken, die nach dem erfindungsgemäßen Verfahren hergestellt wurden, erfolgt ein intensives Verschmelzen mit dem Bindemittel bzw. eine Anbindung an die Matrix des ausgehärteten Bindemittels erst im Zuge des Beschichtungsprozesses. Im Zuge des Vermischens kommt es allenfalls zu einem geringfügigen Anschmelzen, was zu einem Anhaften einzelner Körner aneinander führen kann. Daher sind Körner von Zuschlagstoffen im Bereich der Oberfläche des Beschichtungsfilms normalerweise nicht oder nur teilweise von Bindemittel bedeckt und ragen gewissermaßen aus dem Beschichtungsfilm heraus, wodurch sie optimal zur Einstellung von Oberflächeneigenschaften eingesetzt werden können.

Daneben ergeben sich aber noch weitere Vorteile. Das erfindungsgemäße Verfahren ist ausgesprochen flexibel hinsichtlich der Bereitstellung speziell veredelter Pulverlacke, insbesondere in kleinen Mengen. Man kann hierbei werksseitig eine größere Menge der Basiszusammensetzung herstellen und bevorraten. Entsprechend den Wünschen des Kunden können auch kurzfristig kleinere Mengen Pulverlack hergestellt werden, die jeweils genau die Zuschlagstoffe enthalten, die für die jeweiligen Anforderungen erforderlich sind. Eine Bereitstellung kleiner Mengen speziell veredelten Pulverlacks ist mit dem Verfahren nach dem Stand der Technik nicht möglich bzw. nicht wirtschaftlich.

Es ist auch möglich, dass die Basiszusammensetzung von einem ersten Hersteller produziert wird, das Vermischen mit dem Zuschlagstoff jedoch von einem zweiten Hersteller durchgeführt wird. Der zweite Hersteller braucht in diesem Fall nicht einmal aufwändige Anlagen für Extrusion, Vermahlen und Sichten der Basiszusammensetzung.

Auf der anderen Seite kann die Anlage zur Herstellung der Basiszusammensetzung wesentlich wirtschaftlicher und ohne unnötige Stillstände arbeiten, da eine Umstellung auf andere Zusammensetzungen seltener nötig ist.

Das Vermischen kann unterschiedlich realisiert werden. Eine bevorzugte Möglichkeit besteht im Durchrühren. Hierbei befinden sich Zuschlagsstoff und Basiszusammensetzung (im Folgenden werden die beiden Bestandteile gemeinsam als "Pulver" bezeichnet) in einem Behälter (z.B. einem Trog) und werden durch ein sich bewegenden Rührwerkzeug vermischt. Das Rührwerkzeug, das z.B. paddel- oder hakenartig ausgebildet sein kann, bewegt sich hierbei relativ zu den zu vermischenden Komponenten. Hierbei sind verschiedene Bewegungen des Rührwerkzeugs, insbesondere drehende und oszillierende (also Hin- und Herbewegungen), denkbar.

Auch wenn keine Rührwerkzeuge vorhanden sind, kann durch ein Rütteln des Pulvers ein Vermischen realisiert werden. Führt der Behälter, in dem sich das Pulver befindet, rüttelnde, also oszillierende, Bewegungen aus, so bewirkt dies aufgrund der Trägheit des Pulvers ein Vermischen von Basiszusammensetzung und Zuschlagsstoff. Die Rüttelbewegung kann hierbei vertikale ebenso wie horizontale Komponenten haben.

Weiterhin können die Komponenten zum Vermischen mechanisch umgewälzt werden. Diese Variante ist durch ein Zusammenwirken von mechanischen Kräften und Gravitationskraft sowie ggf. Zentrifugalkraft gekennzeichnet. Durch den wechselnden Einfluss der genannten Kräfte bewegt sich das Pulver in einem Kreislauf, d.h. es wird z.B. erst mechanisch angehoben und fällt danach unter dem Einfluss der Gravitation wieder nach unten. Z.B. kann durch Drehung eines Behälters um eine Drehachse, die nicht in Richtung der Schwerkraft zeigt, eine Durchmischung des Pulvers erreicht werden, insbesondere wenn in die Behälterwand Vorsprünge, Haken oder Ähnliches eingearbeitet sind, durch die das Pulver "mitgenommen", also angehoben wird. Nach einer gewissen Hubstrecke fällt das Pulver wieder nach unten, wird wieder angehoben usw. Es ist hierbei auch denkbar, dass ein Teil des Bewegungskreislaufs unter Einfluss der Zentrifugalkraft erfolgt. So ist in einem rotierenden Behälter folgender Bewegungsablauf denkbar: Wanderung am Boden nach außen - mechanischer Transport nach oben innen - Fallen unter Gravitationseinfluss nach unten - Wanderung nach außen etc.

Ein Vermischen kann auch durch Schalleinwirkung erfolgen. Hierbei können Schallwellen durch die Luft oder z.B. über eine Behälterwandung auf das Pulver übertragen werden. Bei geeigneter Frequenz, die sich z.B. durch Durchfahren ohne Weiteres bestimmen lässt, erfolgt hierdurch auch ein Durchmischen des Pulvers.

Eine weitere Verfahrensvariante stellt das Verwirbeln des Pulvers dar. Hierbei wird das Pulver mittels eines Luftstroms bewegt, der durch ein Gebläse o. Ä. erzeugt wird. Da das Verhältnis von Gewicht zu Luftreibung in etwa proportional zur Längenausdehnung eines Partikels ist, werden sich die sehr kleinen Partikel der Basiszusammensetzung sowie des Zuschlagstoffs - auch bei höherer Dichte - leicht vom Luftstrom mitgerissen. Bei dieser Verfahrensvariante ist es vorteilhaft, das Durchmischen in einem weitgehend verschlossenen Behälter durchzuführen und eventuell notwendige Öffnungen (z.B. für das Einleiten eines Luftstroms) durch Filter für Partikel undurchlässig zu machen.

Um die Anbindung von Zuschlagstoffen an das Bindemittel zu verbessern, kann das Verfahren dadurch variiert werden dass durch Erwärmen der Basiszusammensetzung und/oder des Zuschlagstoffs vor, während und/oder nach dem Vermischen wenigstens ein Teil der Körner des Zuschlagstoffs wenigstens abschnittsweise mit Körnern der Basiszusammensetzung verschmolzen wird. Auch bei dieser Variante bleibt allerdings beim Vermischen und Erwärmen ein pulverförmiger Zustand von Zuschlagstoff und Basiszusammensetzung erhalten, d.h. es erfolgt kein großräumiges Verschmelzen zahlreicher Körner, was ein nachfolgendes Vermahlen notwendig machen würde. Vielmehr findet ein leichtes Anschmelzen statt. Dies kann z.B. vorteilhaft dadurch realisiert werden, dass der Zuschlagstoff unmittelbar vor dem Vermischen erhitzt wird, wodurch Körner der Basiszusammensetzung bei Kontakt leicht anschmelzen und anhaften. Alternativ kann der Zuschlagstoff während oder nach dem Vermischens mittels elektromagnetischer Wellen erwärmt werden, deren Frequenz so gewählt ist, dass im Wesentlichen keine direkte Erwärmung der Basiszusammensetzung erfolgt. Durch die primäre Erwärmung des Zuschlagstoffes kann verhindert werden, dass es zu einem weiteren Verschmelzen von Körnern der Basiszusammensetzung untereinander kommt.

Das erfindungsgemäße Verfahren betrifft solche Fälle, in denen wenigstens ein Zuschlagstoff Schmiermittel umfasst. Der Zusatz von Schmiermitteln bietet sich an, wenn ein Werkstück beschichtet werden soll, das im Einsatz oft Reibung ausgesetzt ist, wie z.B. Scharnierteile, Gurtumlenker, Schlossteile etc. Zum einen wird hierdurch eine benutzerfreundliche leichtere Gängigkeit des entsprechenden Teils erreicht, zum anderen verringern sich die mechanischen Belastungen für die Beschichtung, da sich deutlich weniger Scherkräfte aufbauen können. Wie bereits eingangs geschildert, können Schmiermittel bei Verfahren nach dem Stand der Technik den Extruder verunreinigen. Wird ein Schmiermittel umfassender Zuschlagstoff allerdings pulverförmig mit der Basiszusammensetzung vermischt, kommt es aufgrund des Fehlens von größeren Scherkräften, Druck oder erhöhter Temperatur kaum zu einem Absetzen von Schmiermittel auf den Oberflächen der Vorrichtung, die zum Vermischen verwendet wird. Eine intensive Reinigung der Vorrichtung ist daher nicht oder wesentlich seltener notwendig.

Es ist hierbei explizit nicht ausgeschlossen, dass die Basiszusammensetzung auch Stoffe enthält, die im Stand der Technik als Schmiermittel eingesetzt werden. Diese werden allerdings beim erfindungsgemäßen Verfahren der Basiszusammensetzung normalerweise nicht als Schmiermittel zur Einstellung tribologischer Eigenschaften der fertigen Beschichtung eingesetzt, sondern als Prozesshilfsmittel, z.B. um einen Extrusionsprozess zu unterstützen.

Als Schmiermittel kommen sämtliche aus dem Stand der Technik bekannten Stoffe in Frage, so z. B. Halogenkohlenwasserstoffe, insbesondere Polytetrafluoroethylen (PTFE), Polyvinylidenfluorid (PVDF), Tetrafuorethylen/Hexafluorpropylen-Copolymer (FEP), Perfluoralkoxy-Copolymer (PFA), Copolymer von Tetrafluorethylen mit perfluoriertem Propylen und Perfluoralkylvinylether (EPE), Copolymer aus Tetrafluorethylen und Perfluormethylvinylether (MFA), MoS₂, Bornitrid, Graphit, fluoriertes Graphit, Polysulfone, Mischungen derselben oder eine Kombination hieraus. Diese Schmiermittel werden als pulverförmige Zuschlagstoffe zugesetzt und schmelzen beim Erweichen, Verfließen und Aushärten des Pulverlacks nicht. Sie werden im Zusammenhang mit dieser Erfindung als schmelzbeständige Schmiermittel bezeichnet.

Ebenfalls sehr vorteilhaft ist das erfindungsgemäße Verfahren bei sehr harten Zuschlagsstoffen, sogenannten Hartstoffen. Dies betrifft insbesondere Zuschlagstoffe, die Partikel mit einer Mohs-Härte von wenigstens 5, bevorzugt wenigstens 7, besonders bevorzugt wenigstens 9 aufweisen. Solche Partikel werden insbesondere dort verwendet, wo eine Beschichtung intensiven mechanischen Belastungen ausgesetzt ist. Die Einlagerung sehr harter Partikel, die oftmals teilweise aus der Oberfläche der Beschichtung herausragen, schützt die gesamte Beschichtung vor Druck und Scherkräften und verhindert Abrieb. Solche Partikel können auch vorteilhaft in Verbindung mit Schmiermitteln eingesetzt werden.

Da das Dispergieren solcher harten Partikel in einem Extruder mit hohen Scherkräften verbunden ist, wirkt sich allerdings die Härte der Partikel sehr verschleißfördernd auf den Extruder aus. Beim erfindungsgemäßen Verfahren treten erhöhter Druck oder nennenswerte Scherkräfte nicht auf, weshalb die Vorrichtung, die zum Vermischen verwendet wird, kaum durch solche harten Partikel beschädigt werden kann. Bevorzugte Partikel, die sich durch eine hohe Härte auszeichnen, sind Kieselsäure-, Aluminiumoxid- oder Siliziumcarbidpartikel, Nitridverbindungen wie z. B. Bornitrid, Silicium- oder Titannitrid sowie Mikroglas-Hohlkugeln.

Die Basiskomposition wird beim erfindungsgemäßen Verfahren entsprechend dem Stand der Technik vorzugsweise durch Co-Extrusion mehrerer Komponenten bereitgestellt. Nach einer entsprechenden Extrusion erfolgt typischerweise ein Abkühlen, Aufbrechen (z.B. Granulieren) und Aufmahlen des Extrudats. Hieran anschließend kann noch ein Sichten des so gewonnenen Pulvers durchgeführt werden, um Teilchen ungeeigneter Größe abzusondern.

Als Bindemittel für die Basiszusammensetzung kommen grundsätzlich sämtliche Stoffe in Frage, die auch bei Pulverlacken nach dem Stand der Technik verwendet werden. Hierunter fallen z.B. Bindemittel, die thermisch aushärtbar oder UV-härtbar sind, wie Epoxyharze, Polyester, Acrylatharze, Methacrylatharze und Polyurethane. Daneben kommen auch Thermoplaste in Frage, insbesondere Polyamid, Polyolefine (insbesondere Homo- oder Copolymere von Ethen, Propen, Buten), Polyvinylchlorid und Polyvinylidenchlorid. Es ist hierbei auch explizit vorgesehen, Mischungen von Bindemitteln einzusetzen. Hierbei können auch thermische bzw. durch UV-Strahlung härtbare Bindemittel mit Thermoplasten kombiniert werden.

In vielen Fällen soll mit dem erfindungsgemäßen Verfahren ein Pulverlack zur Beschichtung eines metallischen Werkstücks hergestellt werden. Metallische Werkstücke sind, je nach Art des Metalls sowie nach Einsätzort, der einem mehr oder weniger starken Korrosionsrisiko ausgesetzt. Eine Möglichkeit, hier einen effektiven Korrosionsschutz bereitzustellen, ist die Einbindung von Metallpartikeln in die Beschichtung. Aus diesem Grund können wenigstens ein Zuschlagstoff und/oder die Basiszusammensetzung in einer Weiterbildung der Erfindung Metallpartikel umfassen. Der Einsatz von Metallpartikeln in der Basiszusammensetzung ist aus dem Stand der Technik bekannt und ist im Hinblick auf einen Extrusionsprozess unproblematisch. Allerdings trägt ein nachträgliches Vermischen von Basiszusammensetzung und Metallpartikeln zur Flexibilität des Verfahrens bei, da mit relativ wenig Aufwand schnell Pulverlacke mit dem gewünschten Metallpartikelgehalt bereitgestellt werden können.

Die verwendeten Metallpartikel können verschiedenster Art sein. Bevorzugt ist das Material der Metallpartikel ausgewählt aus der Gruppe bestehend aus Zink, Aluminium, Zinn, Magnesium, Nickel, Kobalt, Mangan, Titan oder Legierungen derselben. Auch Mischungen von Metallpartikeln unterschiedlicher Zusammensetzung können eingesetzt werden. Die Partikel können in Form von Plättchen, Lamellen, Körnern, Staub oder einer Kombination hieraus vorliegen. Bevorzugt können auch Metallpartikel unterschiedlicher chemischer Zusammensetzung, z.B. Zink- und Aluminiumpartikel, eingesetzt werden.

Die Metallpartikel können auch oberflächenbehandelt sein. Typische Oberflächenbehandlungen nach dem Stand der Technik erfolgen z.B. durch Beschichtung mit diversen Salzen, wie Oxiden von Aluminium, Titan, Zirkonium, Chrom, Nickel oder Silizium, Seltenerdsalzen, organischen oder anorganischen Polymeren, Fettsäuren wie Stearinsäure oder Ölsäure. Auch eine Phosphatierung oder eine vorab durchgeführte Oxidation der Oberfläche der Metallpigmente, die nach dem Stand der Technik beispielsweise zur Einstellung einer bestimmten Farbe angewandt wird, fällt unter den Begriff der Oberflächenbehandlung.

Weitere zusätzliche Komponenten, die die Basiszusammensetzung umfassen kann, sind Vernetzer und Additive wie Verlaufsmittel, Entgasungsmittel und Strukturmittel. Daneben kommen auch Pigmente und Farbstoffe in Betracht. Ersteren können zur optischen Gestaltung dienen, wobei anorganische Farbpigmente (z.B. Titanoxid, Eisenoxide, Chromdioxid etc.) ebenso wie verwendet werden können wie organische Farbpigmente (z.B. Pigmentruß, Azopigmente etc.) und Effektpigmente zur Erzeugung von Metallic- oder Perlglanz-Effekten. Bestimmte Pigmente können auch zum Korrosionsschutz eingesetzt werden, wie z.B. bestimmte Phosphate, Alkalisilikate oder Seltenerdsalze. Daneben kann die Basiszusammensetzung auch Füllstoffe, wie z.B. Calciumcarbonate, Talkum oder Bariumsulfat, enthalten. Selbstverständlich ist auch eine Kombination der genannten Komponenten möglich.

Ein mittels des erfindungsgemäßen Verfahrens hergestellter Pulverlack eignet sich zur Beschichtung verschiedener Werkstücke mittels von Beschichtungsverfahren, die im Stand der Technik bekannt sind, wie z.B. elektrostatisches Pulversprühen oder Wirbelsintern. Besonders geeignet ist der Pulverlack für im Automobilbau verwendete Anbauteile wie Gurtumlenker, Griffe, Hebel, Teile von Sitzen, Teile von Schlössern, Scharnierteile usw.

Besonders bevorzugt ist es, dass der Pulverlack auf ein metallisches Werkstück aufgetragen wird, das mit einer zinkhaltigen Korrosionsschutzschicht versehen ist. Eine solche Korrosionsschicht kann durch Feuerverzinken oder galvanisch aufgebracht werden. Durch die Kombination mit dem erfindungsgemäß hergestellten Pulverlack ergibt sich eine besonders gute Widerstandsfähigkeit des Werkstücks gegen Korrosion und mechanische Belastungen.

Im Folgenden werden Details der Erfindung anhand von Ausführungsbeispielen erläutert.

### Beispiel 1:

Zur Herstellung einer Basiszusammensetzung eines Pulverlacks werden die Folgenden Komponenten bereitgestellt.

| | |
|---|---|
| Araldite GT 7203 (Epoxyharz) | 71,00 Gew.-% |
| Aradur 3082 (Phenolischer Härter) | 26,40 Gew.-% |
| Byk 360P (Antikrater- und Verlaufsadditiv) | 1,40 Gew.-% |
| Lanco TF 1778 (PTFE/PE Wachs, Prozesshilfsmittel) | 0,20 Gew.-% |
| Farbruss FW 200 geperlt | 1,00 Gew.-% |

Die Komponenten werden einzeln abgewogen und in einen speziellen Container gegeben, der in die Form eines umgedrehten Kegels mit offener Basis hat. Für den Mischvorgang wird ein Containermischer (Hersteller: MIXACO) verwendet. Dieser Mischer verfügt über eine Doppelständer-Mischanlage, unter die der Container mit dem Mischgut gefahren wird. In diesem Zustand zeigt die offene Kegelbasis nach oben. Ein hierzu passendes Gegenstück, das Teil des Mischers ist, wird mit dem Container verriegelt. Anschließend wird der Container um 180° in die Mischposition geschwenkt, so dass die Kegelspitze nach oben zeigt. Das Mischgut wird durch ein rotierendes Mischwerkzeug, dass die Form einer sich verjüngenden Spirale hat, die der Form des Containers angepasst ist, nach oben und innen befördert, bis es im Bereich der Kegelspitze durch das rohrförmige Zentrum des Mischwerkzeugs nach unten fällt. Unten angekommen, wird das Mischgut durch das Mischwerkzeug nach außen und anschließend wieder wie beschrieben nach oben befördert. Dieser Mischzyklus läuft besonders schonend ab und es treten keine nennenswerten mechanischen Drücke oder Scherkräfte auf.

Die die Komponenten werden 5 Minuten vermischt, bis sie homogen sind. Nach dem Mischvorgang wird die Anlage um 180° zurückgeschwenkt und der Container wird entkoppelt.

Das homogenisierte Gemenge wird in einem Ko-Kneter (Hersteller: Buss) unter Temperatur- und mechanischer Druckeinwirkung aufgeschmolzen und dispergiert. Die in der Basiszusammensetzung enthaltene geringe Menge an PTFE/PE-Wachs bewirkt hierbei keine nennenswerte Verschmutzung des Extruders. Die auf diese Weise extrudierte Masse wird in einer Kompakt-Kühlanlage verfestigt und anschließend grob vorgebrochen. Hieran schließt eine Verarbeitung in einer Rotor-Sichter-Mühle an, wobei sich durch ein Vermahlen und Sichten Korngrößen im Bereich von bis zu 80 µm. Zu kleine Partikel werden nachfolgend in einem Zyklonabscheider abgetrennt.

Die auf diese Weise hergestellte Basiszusammensetzung stellt für sich genommen bereits einen einsatzfähigen Pulverlack dar.

Der Pulverlack wird in einem zweiten Verfahrensabschnitt nachträglich veredelt, indem pulverförmige Zuschlagsstoffe hinzugefügt werden. Hierbei sollen zum einen die Abriebfestigkeit, zum anderen die tribologischen Eigenschaften einer Beschichtung aus dem Pulverlack optimiert werden. Zu diesem Zweck wird zum einen Aluminiumoxid, das sich durch eine Mohs-Härte von 9 auszeichnet, zum anderen Molybdänsulfid als festes Schmiermittel hinzugegeben.
Die Gewichtsanteile sind hierbei wie folgt:

| | |
|---|---|
| Basiszusammensetzung | 81,30 Gew.-% |
| Alodur ZWSK- AT F 1000 (Aluminumoxid) | 16,30 Gew.-% |
| Molybdänsulfid OKS 110 | 2,40 Gew.-% |

Die genannten Komponenten werden wiederum in einem Containermischer 5 Minuten vermischt. Hierdurch wird eine ausreichende Homogenisierung erreicht. Der Mischvorgang wird bei Raumtemperatur durchgeführt und ist - wie bereits geschildert - besonders schonend, da keine nennenswerten Drücke oder Scherkräfte auf die Pulverpartikel wirken. Aus diesem Grund wird das Innere des Mischers auch weder durch die extrem harten Aluminiumoxidpartikel beschädigt, noch kommt es zu einer Verschmutzung durch Molybdänsulfid, welches sich auf den Oberflächen im Inneren des Mischers absetzen könnte. Die Korngröße der einzelnen Komponenten ändert sich nicht. Ebenso wenig kommt es zur Agglomeration der Komponenten; nach dem Mischen der Zuschlagstoffe liegt ein veredelter, weiterhin einsatzfähiger Pulverlack vor.

Der Pulverlack ist nun einsatzbereit und kann in geeignete Gebinde abgefüllt werden. Er lässt sich mit den gängigen Beschichtungsverfahren für Pulverlacke auftragen und zu einer Beschichtung aushärten. Beschichtungen, die mit der beschriebenen Rezeptur hergestellt werden, zeichnen sich durch eine hervorragende Abriebfestigkeit und geringe Oberflächenreibung aus. Bei zahlreichen Anwendungen, z.B. bei Scharnierteilen, kann durch die entsprechende Beschichtung auf eine Schmierung mit Fett oder flüssigem Schmiermittel verzichtet werden.

### Beispiel 2:

Zur Optimierung der tribologischen Eigenschaften einer Beschichtung für ein neues Bauteil sollen verschiedene Schmiermittelzusätze getestet werden. Hierzu wird ein Gebinde mit 100 kg der Basiszusammensetzung aus Beispiel 1 angekauft. Es werden nun in einem Labormischer (Standard-Vertikalmischer) jeweils 2 kg der Basiszusammensetzung mit unterschiedlichen Schmiermittelzusätzen vermischt. Hierbei werden 50 verschiedene Testzusammensetzungen hergestellt. Jeweils 10 Zusammensetzungen enthalten Polytetrafluoroethylen (s_{d}-Wert 7 µm) bzw. Molybdänsulfid (s_{d}-Wert 4 µm) bzw. Bornitrid (s_{d}-Wert 5 µm) bzw. Graphit(s_{d}-Wert 12 µm) bzw. Polyvinylidenfluorid (PVDF) (s_{d}-Wert 8 µm), wobei der Anteil innerhalb der 10 Zusammensetzungen jeweils in 5-Gramm-Schritten von 5 g bis 50 g gesteigert wird. Der Durchmesser der Schmiermittel-Partikel liegt durchschnittlich also zwischen 4 µm und 12 µm.

Mit jeder der auf diese Weise erhaltenen Testzusammensetzungen wird eine Gruppe von Bauteilen im elektrostatischen Pulversprühverfahren beschichtet. Anschließend können die Eigenschaften der einzelnen Beschichtungen untersucht werden.

Eine Bereitstellung kleiner Mengen speziell veredelten Pulverlacks wie in dem dargestellten Beispiel ist bei Verfahren nach dem Stand der Technik kaum möglich.

### Beispiel 3: (nicht nach der Erfindung)

Es wird analog dem Verfahren nach Beispiel 1 durch Co-Extrusion, Vermahlen und Sichten eine pulverförmige Basiszusammensetzung mit den folgenden Inhaltsstoffen hergestellt:

| | |
|---|---|
| D.E.R. 662 (Epoxidharz) | 13,0 Gew.-% |
| Epikote 1055 (Epoxidharz) | 4,2 Gew.-% |
| Epikote 1007 (Epoxidharz) | 26,0 Gew.-% |
| Flammruß | 1,0 Gew.-% |
| Minex (Silikatfüllstoff) | 54,0 Gew.-% |
| 2-Methylimidazol (Beschleuniger) | 1,0 Gew.-% |
| BYK 360 P (Verlaufmittel) | 0,8 Gew.-% |

Für einen mengenmäßig begrenzten Kundenauftrag sollen 50 kg eines Pulverlacks für besonders widerstandsfähige Beschichtungen hergestellt werden. Hierzu werden 85 Gewichtsanteile der Basiszusammensetzung mit 15 Gewichtsanteilen Siliziumcarbidpulver (s_{d}-Wert 5µm) in einem Standard-Vertikalmischer vermischt.

Der so erhaltene Pulverlack kann im elektrostatischen Pulversprühverfahren aufgetragen und bei 150°C gehärtet werden. Die Beschichtung ist aufgrund der eingelagerten Siliziumcarbid-Partikel, die eine Mohs-Härte von 9,6 aufweisen, besonders abriebfest.

## Patentansprüche

1. Verfahren zur Herstellung eines Pulverlacks mit den Schritten
- Bereitstellen einer pulverförmigen Basiszusammensetzung, umfassend Bindemittel, sowie
- Vermischen wenigstens eines pulverförmigen Zuschlagstoffs mit der pulverförmigen Basiszusammensetzung zu einem fertigen Pulverlack,
wobei beim Vermischen ein pulverförmiger Zustand von Zuschlagstoff und Basiszusammensetzung erhalten bleibt,
**dadurch gekennzeichnet, dass**
als pulverförmiger Zuschlagstoff mindestens ein Schmiermittel eingesetzt wird, das beim Aushärten des Pulverlacks nicht schmilzt.

2. Verfahren nach Anspruch 1, **dadurch gekennzeichnet, dass** das Vermischen durch Durchrühren, Rütteln, mechanisches Umwälzen, Schalleinwirkung oder Verwirbeln erfolgt.

3. Verfahren nach Anspruch 1 oder 2, **dadurch gekennzeichnet, dass** durch Erwärmen der Basiszusammensetzung und/oder des Zuschlagstoffs vor, während und/oder nach dem Vermischen wenigstens ein Teil der Körner des Zuschlagstoffs wenigstens abschnittsweise mit Körnern der Basiszusammensetzung verschmolzen wird.

4. Verfahren nach Anspruch 1, **dadurch gekennzeichnet, dass** ein Schmiermittel verwendet wird, das ausgewählt ist aus der Gruppe bestehend aus Halogenkohlenwasserstoffen, insbesondere Polytetrafluorethylen (PTFE), Polyvinylidenfluorid (PVDF), Tetrafuorethylen/Hexafluorpropylen-Copolymer (FEP), Perfluoralkoxy-Copolymer (PFA), Copolymer von Tetrafluorethylen mit perfluoriertem Propylen und Perfluoralkylvinylether (EPE), Copolymer aus Tetrafluorethylen und Perfluormethylvinylether (MFA), MoS₂, Bornitrid, Graphit, fluoriertem Graphit, Polysulfonen oder Mischungen derselben.

5. Verfahren nach wenigstens einem der vorhergehenden Ansprüche, **dadurch gekennzeichnet, dass** die Basiszusammensetzung durch Co-Extrusion mehrerer Komponenten bereitgestellt wird.

6. Verfahren nach wenigstens einem der vorhergehenden Ansprüche, **dadurch gekennzeichnet, dass** ein Bindemittel eingesetzt wird, das ausgewählt ist aus der Gruppe bestehend aus Epoxyharzen, Polyestern, Acrylatharzen, Methacrylatharzen, Polyurethanen sowie Thermoplasten, insbesondere Polyamid, Polyolefinen, Polyvinylchlorid und Polyvinylidenchlorid oder Mischungen derselben.

7. Verfahren nach wenigstens einem der vorhergehenden Ansprüche, **dadurch gekennzeichnet, dass** wenigstens ein Metallpartikel umfassender Zuschlagstoff und/oder eine Metallpartikel umfassende Basiszusammensetzung eingesetzt wird.

8. Verfahren nach Anspruch 7, **dadurch gekennzeichnet, dass** metallischen Partikel verwendet werden, die ausgewählt sind aus der Gruppe bestehend aus Zink, Aluminium, Zinn, Magnesium, Nickel, Kobalt, Mangan, Titan sowie Mischungen und Legierungen derselben, in Form von Plättchen, Lamellen, Körnern oder Staub, oder einer Kombination hieraus.

9. Pulverlack, hergestellt nach einem Verfahren gemäß mindestens einem der Ansprüche 1 bis 8.

10. Verwendung eines Pulverlacks nach Anspruch 9 zur Beschichtung von Werkstücken, insbesondere von im Automobilbau verwendeten Anbauteilen.

11. Verwendung nach Anspruch 10, wobei das Werkstück ein metallisches Werkstück mit einer zinkhaltigen Korrosionsschutzschicht ist.

## Claims

1. Method for producing a powder coating material, with the steps of
- providing a pulverulent base composition comprising binder, and
- mixing at least one pulverulent adjuvant with the pulverulent base composition to give a completed powder coating material,
a pulverulent state of adjuvant and base composition being preserved in the course of mixing,
**characterized in that**
use is made as pulverulent adjuvant of at least one lubricant which does not melt when the powder coating material is cured.

2. Method according to Claim 1, **characterized in that** the mixing is accomplished by churning, shaking, mechanical circulation, sonication or swirling.

3. Method according to Claim 1 or 2, **characterized in that** through heating of the base composition and/or of the adjuvant before, during and/or after the mixing, at least some of the grains of the adjuvant are fused, at least in sections, with grains of the base composition.

4. Method according to Claim 1, **characterized in that** a lubricant is used which is selected from the group consisting of halogenated hydrocarbons, especially polytetrafluoroethylene (PTFE), polyvinylidene fluoride (PVDF), tetrafluoro-ethylene/hexafluoropropylene copolymer (FEP), perfluoroalkoxy copolymer (PFA), copolymer of tetrafluoroethylene with perfluorinated propylene and perfluoroalkyl vinyl ether (EPE), copolymer of tetrafluoroethylene and perfluoromethyl vinyl ether (MFA), MoS₂, boron nitride, graphite, fluorinated graphite, polysulphones or mixtures thereof.

5. Method according to at least one of the preceding claims, **characterized in that** the base composition is provided by coextrusion of a plurality of components.

6. Method according to at least one of the preceding claims, **characterized in that** a binder is used which is selected from the group consisting of epoxy resins, polyesters, acrylate resins, methacrylate resins, polyurethanes and also thermoplastics, especially polyamide, polyolefins, polyvinyl chloride and polyvinylidene chloride or mixtures thereof.

7. Method according to at least one of the preceding claims, **characterized in that** at least one adjuvant comprising metal particles and/or one base composition comprising metal particles is used.

8. Method according to Claim 7, **characterized in that** metallic particles are used which are selected from the group consisting of zinc, aluminium, tin, magnesium, nickel, cobalt, manganese, titanium and also mixtures and alloys thereof, in the form of flakes, platelets, grains or dust, or of a combination hereof.

9. Powder coating material produced by a method according to at least one of Claims 1 to 8.

10. Use of a powder coating material according to Claim 9 for coating workpieces, especially components used in automotive construction for installation in or on vehicles.

11. Use according to Claim 10, the workpiece being a metallic workpiece having a zinc-containing anticorrosion layer.

## Revendications

1. Procédé de fabrication d'un vernis en poudre comprenant les étapes suivantes :
- la préparation d'une composition de base en poudre, comprenant un liant, et
- le mélange d'au moins un additif en poudre avec la composition de base en poudre pour former un vernis en poudre fini,
un état en poudre de l'additif et de la composition de base étant maintenu pendant le mélange,
**caractérisé en ce qu'**au moins un lubrifiant qui ne fond pas lors du durcissement du vernis en poudre est utilisé en tant qu'additif en poudre.

2. Procédé selon la revendication 1, **caractérisé en ce que** le mélange a lieu par agitation, secouage, cylindrage mécanique, effet sonique ou fluidisation.

3. Procédé selon la revendication 1 ou 2, **caractérisé en ce qu'**au moins une partie des grains de l'additif est fusionnée au moins en sections avec des grains de la composition de base par chauffage de la composition de base et/ou de l'additif avant, pendant et/ou après le mélange.

4. Procédé selon la revendication 1, **caractérisé en ce qu'**un lubrifiant qui est choisi dans le groupe constitué par les hydrocarbures halogénés, notamment le polytétrafluoroéthylène (PTFE), le polyfluorure de vinylidène (PVDF), le copolymère de tétrafluoroéthylène/hexafluoropropylène (FEP), le copolymère de perfluoroalcoxy (PFA), le copolymère de tétrafluoroéthylène avec du propylène perfluoré et de l'éther de perfluoroalkyle et de vinyle (EPE), le copolymère de tétrafluoroéthylène et d'éther de perfluorométhyle et de vinyle (MFA), MoS₂, le nitrure de bore, le graphite, le graphite fluoré, les polysulfones ou leurs mélanges est utilisé.

5. Procédé selon au moins l'une quelconque des revendications précédentes, **caractérisé en ce que** la composition de base est préparée par co-extrusion de plusieurs composants.

6. Procédé selon au moins l'une quelconque des revendications précédentes, **caractérisé en ce qu'**un liant est utilisé, qui est choisi dans le groupe constitué par les résines époxy, les polyesters, les résines d'acrylate, les résines de méthacrylate, les polyuréthanes, ainsi que les thermoplastiques, notamment le polyamide, les polyoléfines, le polychlorure de vinyle et le polychlorure de vinylidène ou leurs mélanges.

7. Procédé selon au moins l'une quelconque des revendications précédentes, **caractérisé en ce qu'**au moins un additif comprenant des particules métalliques et/ou une composition de base comprenant des particules métalliques est utilisé.

8. Procédé selon la revendication 7, **caractérisé en ce que** des particules métalliques sont utilisées, qui sont choisies dans le groupe constitué par le zinc, l'aluminium, l'étain, le magnésium, le nickel, le cobalt, le manganèse, le titane, ainsi que leurs mélanges et alliages, sous la forme de plaquettes, de lamelles, de grains ou de poussière, ou une de leurs combinaisons.

9. Vernis en poudre, fabriqué par un procédé selon au moins l'une quelconque des revendications 1 à 8.

10. Utilisation d'un vernis en poudre selon la revendication 9 pour le revêtement de composants, notamment de pièces utilisées dans la construction d'automobiles.

11. Utilisation selon la revendication 10, dans laquelle le composant est un composant métallique muni d'une couche anticorrosion contenant du zinc.
